(19) Europäisches Patentamt
European Patent Office
Office européen des brevets

(11) Veröffentlichungsnummer: **0 539 836 A2**

(12) # EUROPÄISCHE PATENTANMELDUNG

(21) Anmeldenummer: **92117869.5**

(51) Int. Cl.[5]: **C09B 67/22**, //C09B62/503

(22) Anmeldetag: **20.10.92**

(30) Priorität: **31.10.91 DE 4135846**

(43) Veröffentlichungstag der Anmeldung: **05.05.93 Patentblatt 93/18**

(84) Benannte Vertragsstaaten: **CH DE FR GB LI**

(71) Anmelder: **BAYER AG**

**W-5090 Leverkusen 1 Bayerwerk(DE)**

(72) Erfinder: **Schwarz, Max, Dr.**
**Am Wasserturm 18**
**W-5090 Leverkusen 3(DE)**
Erfinder: **Grütze, Joachim, Dr.**
**Eschenweg 25**
**W-5068 Odenthal(DE)**
Erfinder: **Hildebrand, Dietrich, Dr.**
**Wingensiefer Kamp 13**
**W-5068 Odenthal(DE)**
Erfinder: **Wolff, Joachim, Dr.**
**Schlingenhofenerstrasse 38**
**W-5068 Odenthal(DE)**
Erfinder: **Stöhr, Frank Michael, Dr.**
**Am Thelen Siefen 10**
**W-5068 Odenthal(DE)**

(54) **Reaktivfarbstoff-Blaumischung mit verbesserter Kombinierbarkeit.**

(57) Mischungen auf Basis eines Triphendioxazinfarbstoffes der Formel (I.1) oder (I.2)

EP 0 539 836 A2

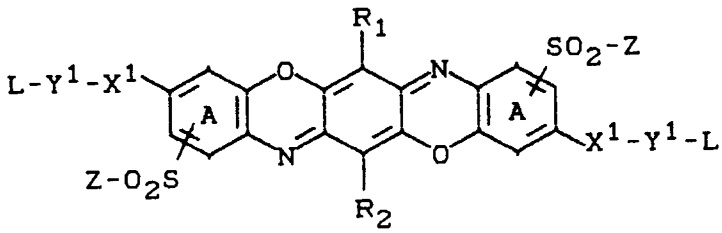

(I.1)

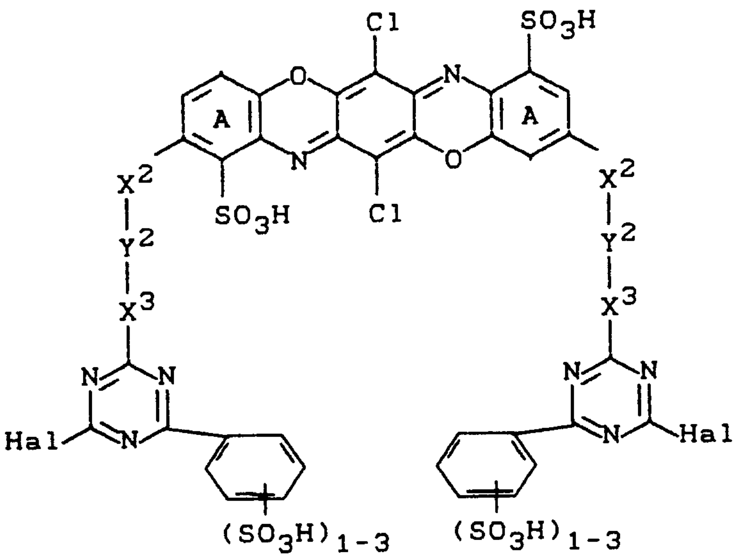

(I.2)

und eines Anthrachinonfarbstoffes, der in Form der freien Säure der Formel (II) entspricht,

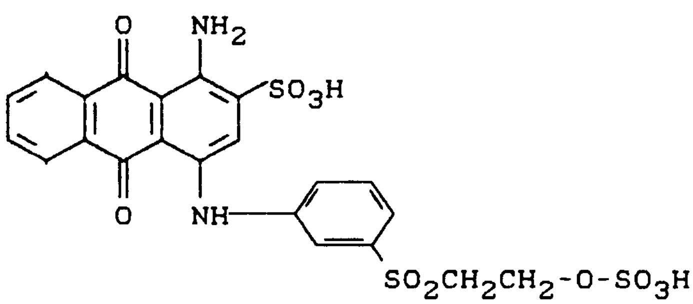

(II),

wobei die Substituenten die in der Beschreibung angegebene Bedeutung haben, zeigen eine verbesserte Kombinierbarkeit mit anderen Farbstoffen.

Die Erfindung betrifft eine Reaktivfarbstoff-Blaumischung aus zwei Reaktivblaufarbstoffen gleicher Nuance, die beim Färben von Cellulosefasern oder Cellulosefasermischungen ein gegenüber den Einzelkomponenten verbessertes Kombinierbarkeitsverhalten aufweist.

Reaktivfarbstoffe werden in Form ihrer Einzelkomponenten oder in Form von Kombinationen mit Farbstoffen unterschiedlicher Farbtöne verwendet, wobei man davon ausgeht, daß die Fixierausbeute einer Komponente in der Kombination bei gleichem Gesamtfarbstoffgehalt der Färbeflotte die gleiche Fixierausbeute ergibt wie beim Färben der Einzelkomponenten allein. Sehr wertvolle Farbstoffe sind die in der DE-A-3 439 756 beschriebenen Triphendioxazinfarbstoffe. In Kombination mit den für die Herstellung von Modetönen erforderlichen Reaktivrot- und Gelbfarbstoffen zeigen sie unter Umständen aber eine verminderte Ausbeute, so daß eine Dichromie eine Verschiebung in Richtung der Nuance des Kombinationsfarbstoffs aufweisen kann und in Trichromien der Blauanteil eingeschränkt ist.

Der Erfindung liegt die Aufgabe zugrunde, die Verwendung derartiger Farbstoffe in Kombination zu verbessern.

Die vorliegende Erfindung betrifft eine Mischung aus einem Triphendioxazinreaktivfarbstoff, einem Anthrachinonreaktivfarbstoff und gegebenenfalls weiteren Farbstoffen, dadurch gekennzeichnet, daß der Triphendioxazinfarbstoff in Form der freien Säure der Formel (I.1) oder (I.2) entspricht

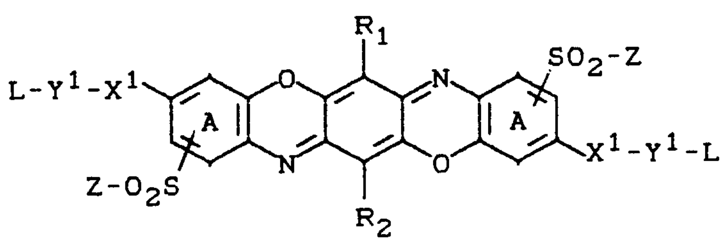

(I.1)

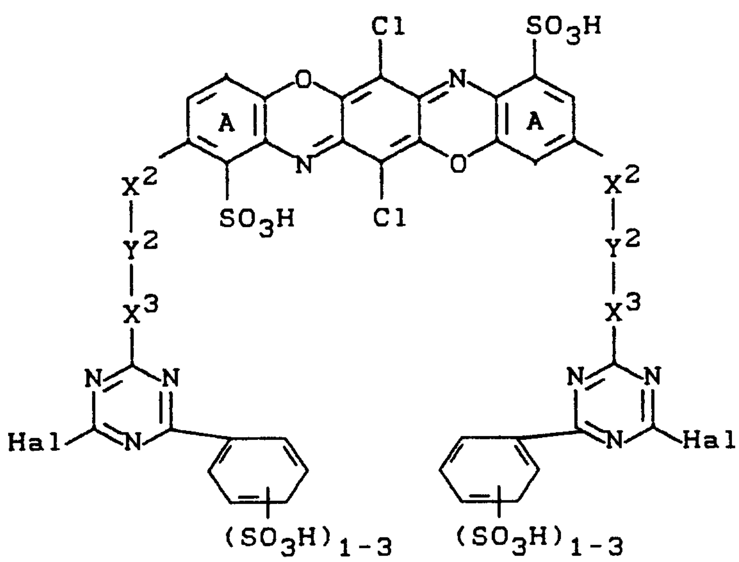

(I.2)

worin

| | |
|---|---|
| $R_1$, $R_2$ = | H oder Substituent, insbesondere Cl oder Br, |
| $X^1-X^3$ = | unabhängig voneinander $NR_3$, O, S, |
| $R_3$ = | H, gegebenenfalls substituiertes $C_1-C_4$-Alkyl, |
| $Y^1$, $Y^2$ = | unabhängig voneinander Alkylen, insbesondere $C_2-C_6$-Alkylen, gegebenenfalls substituiert oder durch Heteroatome in der Alkylenkette unterbrochen, |
| Z = | $-CH=CH_2$ oder $-CH_2-CH_2-W$ worin |
| w = | ein unter Bildung der Gruppe $-CH=CH_2$ abspaltbarer Rest, beispielsweise $-OSO_3H$, $-SSO_3H$ oder $-OPO_3H_2$, $-O$-Acyl, insbesondere $-O-C_1-C_4$-Alkylcarbonyl bedeutet, |

wobei die Ringe A gegebenenfalls weitere übliche Substituenten aufweisen können

L = unabhängig voneinander eine wasserlöslich machende Gruppe, insbesonders Sulfo, Carboxy und Sulfato

Hal = F, Cl

und der Anthrachinonreaktivfarbstoff in Form der freien Säure der Formel (II)

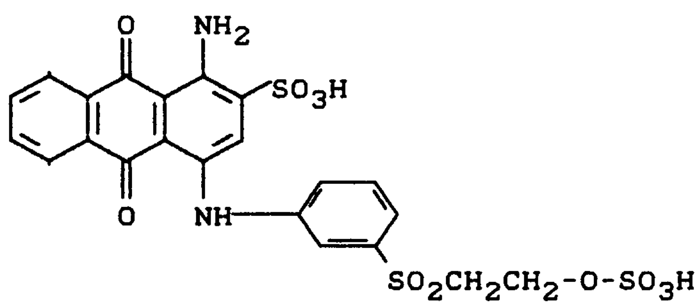

(II)

entspricht.

Bevorzugte Verbindungen I.1 entsprechen der Formel

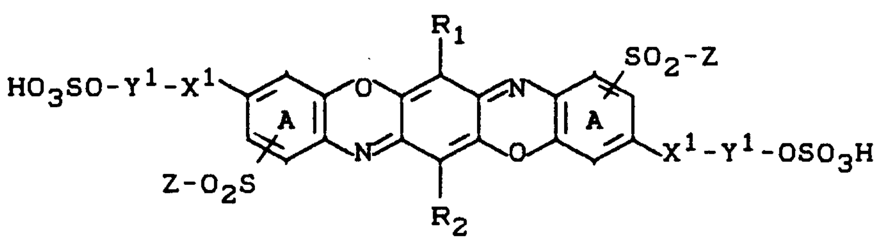

worin die Substituenten die angegebene Bedeutung haben. Besonders bevorzugt sind:

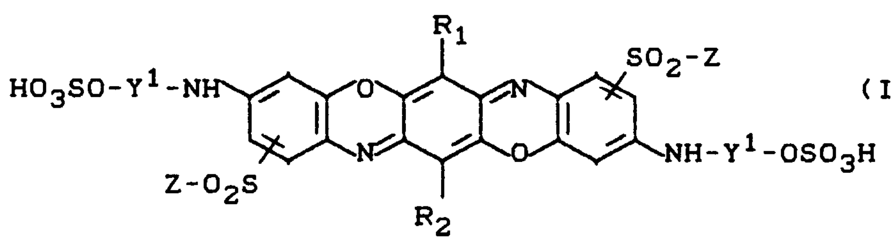

(Ia)

worin

$R_1$, $R_2$ und $Y^1$ die oben angegebene Bedeutung haben und

Z $-CH_2-CH_2-OSO_3H$ oder $-CH=CH_2$ bedeutet,

insbesondere

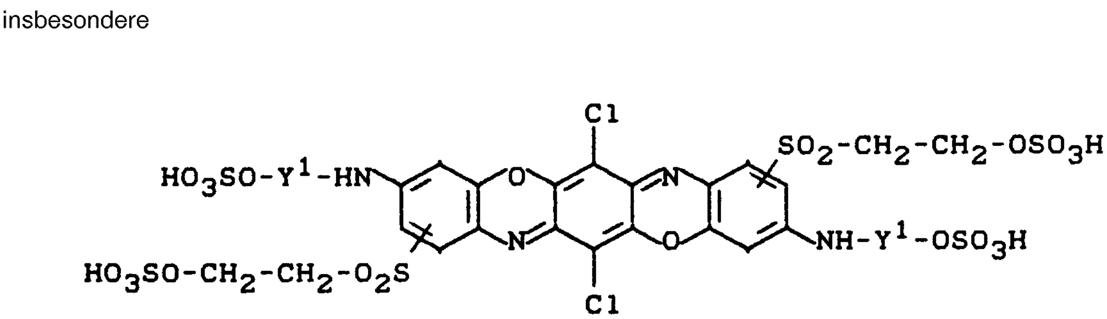

(Ib)

worin
$Y^1$ = $C_2-C_4$ – Alkylen.
Ein ganz besonders bevorzugter Farbstoff entspricht folgender Formel (Ic)

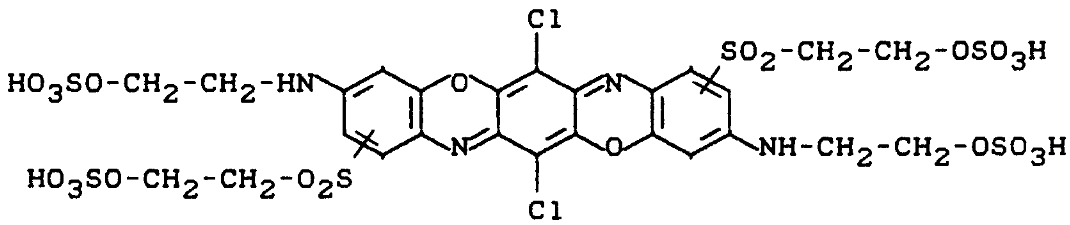

(Ic)

Weitere bevorzugte Verbindungen entsprechen der Formel (Id)

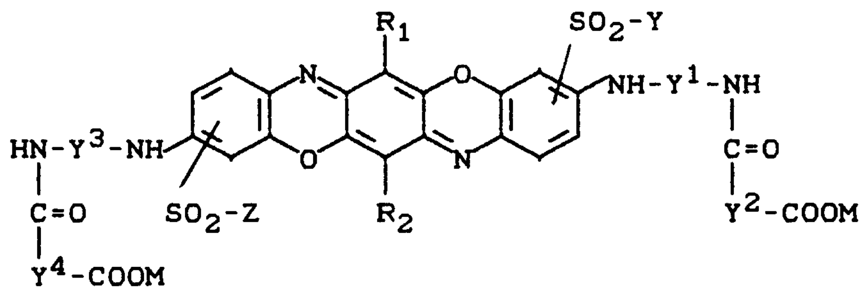

(Id)

worin
$R_1$, $R_2$ = Cl
$Y^1$,$Y^2$,$Y^3$,$Y^4$ = unabhängig voneinander eine Alkylengruppe mit 2 bis 6 C – Atomen
insbesondere der Formel (Ie)

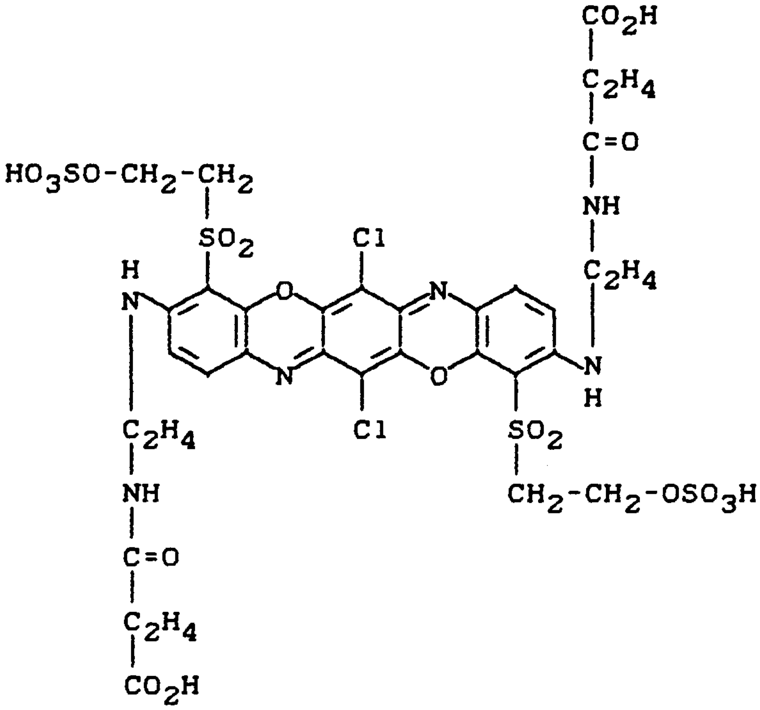

(Ie)

Bevorzugte Verbindungen I.2 entsprechen folgenden Formeln:

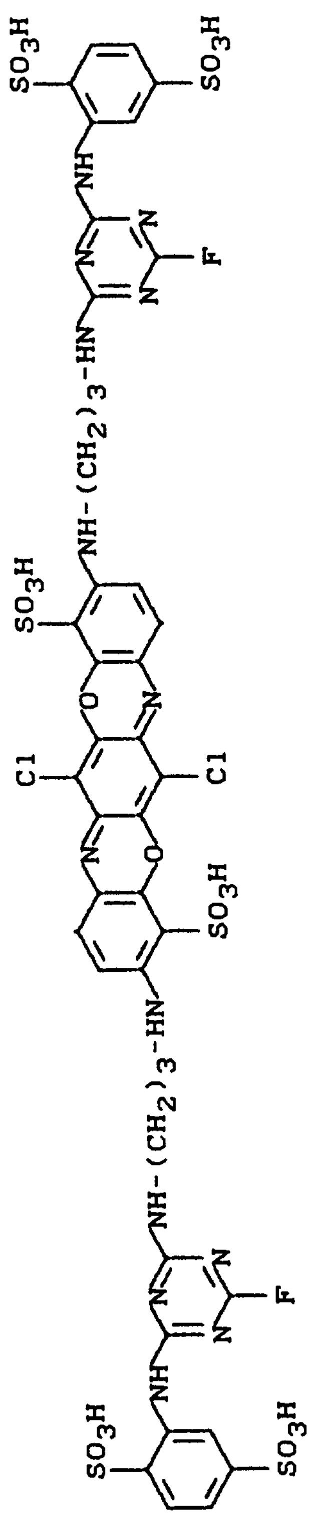

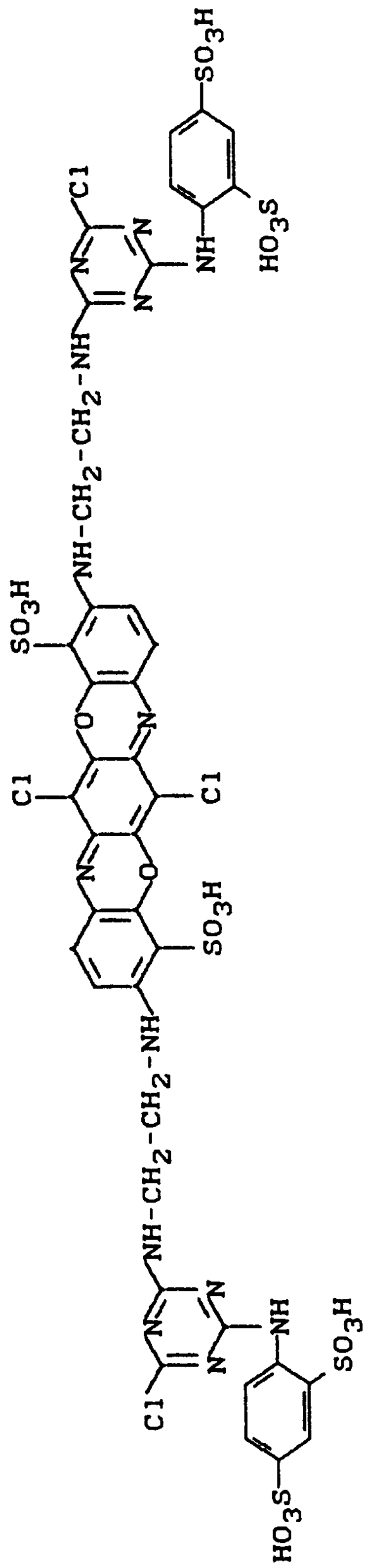

In einer bevorzugten Ausführungsform der Erfindung sind, bezogen auf die Mischung der Farbstoffe I und II, 10 bis 90 Gew.-% I und 90 bis 10 Gew.-% II, insbesondere 30 bis 70 Teile des Farbstoffs I und 70 bis 30 Teile des Farbstoffs II enthalten.

Die erfindungsgemäße Mischung der Farbstoffe I und II ergibt überraschenderweise eine den beiden Einzelkomponenten sehr ähnliche Aufzieh- und Fixierkurve und damit ein den beiden Einzelfarbstoffen im

Typ sehr naheliegendes färberisches Verhalten, Die erfindungsgemäße Mischung zeigt sich jedoch in Kombination mit Drittfarbstoffen deutlich weniger degressiv als der Farbstoff der Formel (I) und ergibt die gleiche Fixierausbeute wie ohne Zumischung weiterer Fremdfarbstoffe.

Zur Erläuterung wird verwiesen auf Fig, 1:
Aufgetragen ist die Fixierkurve (Fixierdauer in Minuten gegen fixierten Farbstoff auf der Faser in % der Endfixierung). Kurve Ic zeigt den Verlauf des Farbstoffes Ic alleine, Kurve II den Verlauf des Farbstoffes II alleine und die durchgezogene Linie den Verlauf einer Mischung aus Ic und II im Verhältnis 50 zu 50 Teilen, Aus dem Kurvenverlauf folgt, daß sich das färberische Verhalten der Einzelfarbstoffe in der Mischung angleicht zu einem neuen Farbstoff mit einer einheitlichen neuen Fixierkurve.

Die beanspruchte Farbstoffmischung eignet sich insbesondere zum Färben von Cellulosefasern sowie deren Mischungen nach allen Färbeverfahren des Farbstoffs I. Eine bevorzugte Anwendung ist das Färben bei 60° gemäß folgendem Färbeschema:

| Zeit (Min.) | Temperatur (°C) | Maßnahme |
|---|---|---|
| 0 | 30° | Zusatz Na-Bicarbonat Zusatz von NaCl oder $Na_2SO_4$ / 20 - 60 g/l Zusatz Soda, 10-20 g/l Verweilen bei 60°C |
| 5 | 30° | |
| 15 | 30° | |
| 35 | 30° | |
| 45-75 | Aufheizen auf 60°C | |

Die Farbstoffmischung kann die üblichen Zusätze enthalten, vorzugsweise enthält sie auf 100 Gew.-Teile Reaktivfarbstoffmischung 1 bis 50 Teile eines anorganischen Salzes, 1 bis 5 Gew.-Teile eines anorganischen Puffers, 0,5 bis 10 Teile eines organischen anionischen Dispergiermittels und 0,5 bis 5 Teile eines Entstaubungsmittels.

Beispiel 1

100 Teile einer Baumwollwirkware werden bei 30°C mit 1000 Teilen einer wäßrigen Färbeflotte behandelt, welche gelöst enthält:
2 Teile der Reaktivfarbstoffmischung aus 1 Teil des Farbstoffs Ic, 1 Teil des Farbstoffs III der Formel

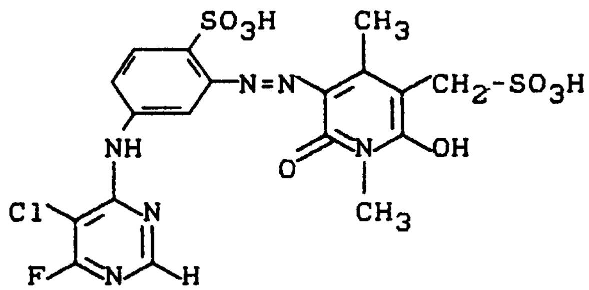

und 1 Teil des Farbstoffs II
1/2 Teil Natriumbicarbonat
50 Teile Natriumchlorid und
15 Teile Soda.

Nach gleichmäßiger Verteilung des Farbstoffs auf dem Fasermaterial über 45 Minuten bei 30°C wird die Flotte in 30 Minuten auf 60°C erwärmt und weitere 30 Minuten bei lebhafter Bewegung der Ware in der Flotte gefärbt. Danach wird die Flotte abgelassen, zweimal bei 50°C und einmal bei 80°C gespült.

Daraufhin wird mit frischer Flotte aufgefüllt, auf 98°C erwärmt und 15 Minuten bei dieser Temperatur behandelt. Nach dem Abkühlen erhält man eine klare Grünfärbung mit guten Echtheitseigenschaften.

**Patentansprüche**

1. Reaktivfarbstoffmischung, enthaltend wenigstens einen Triphendioxazinreaktivfarbstoff und wenigstens einen Anthrachinonreaktivfarbstoff, dadurch gekennzeichnet, daß der Triphendioxazinfarbstoff in Form der freien Säure der Formel (I.1) oder (I.2) entspricht

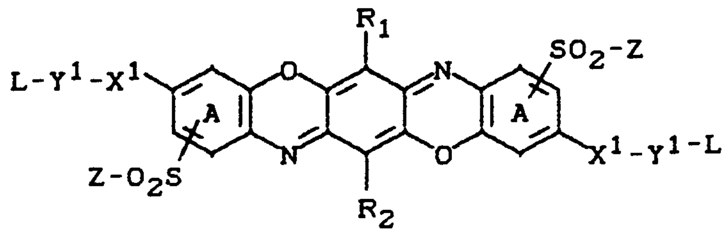

(I.1)

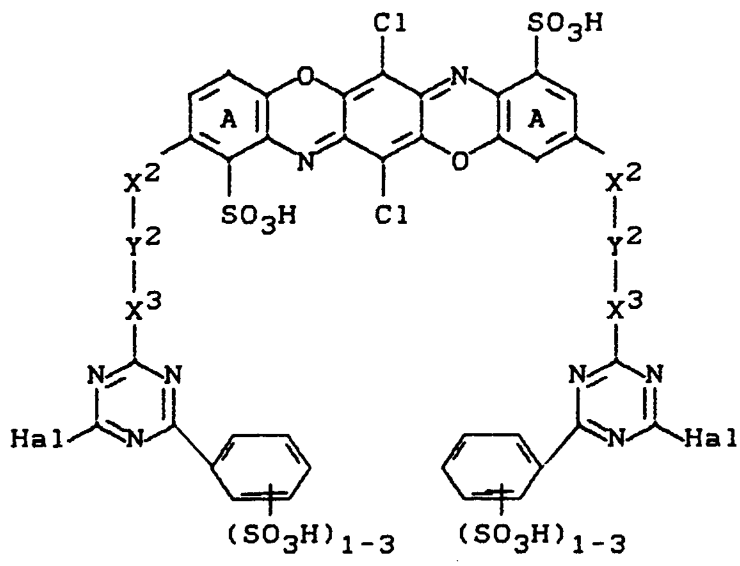

(I.2)

worin

| | |
|---|---|
| $R_1$, $R_2$ = | H oder bei Triphendioxazinfarbstoffen üblichen Substituent, |
| $R_3$ = | H, gegebenenfalls substituiertes $C_1-C_4$-Alkyl, |
| Hal = | Cl, F, |
| $X^1-X^3$ = | unabhängig voneinander $NR_3$, O, S, |
| $Y^1$, $Y^2$ = | unabhängig voneinander Alkylen, insbesondere $C_2-C_6$-Alkylen, gegebenenfalls substituiert oder durch Heteroatome in der Alkylenkette unterbrochen, |
| Z = | $-CH=CH_2$ oder $-CH_2-CH_2-W$ worin |
| W = | ein unter Bildung der Gruppe $-CH=CH_2$ abspaltbarer Rest, |
| L = | unabhängig voneinander eine wasserlöslich machende Gruppe, |

wobei die Ringe A gegebenenfalls weitere übliche Substituenten aufweisen können und daß der Anthrachinonreaktivfarbstoff der folgenden Formel (II) entspricht

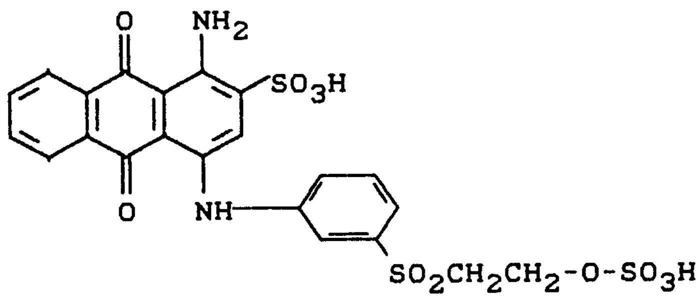

(II)

2. Reaktivfarbstoffmischung gemäß Anspruch 1, dadurch gekennzeichnet, daß die Verbindung (I) folgender Formel entspricht

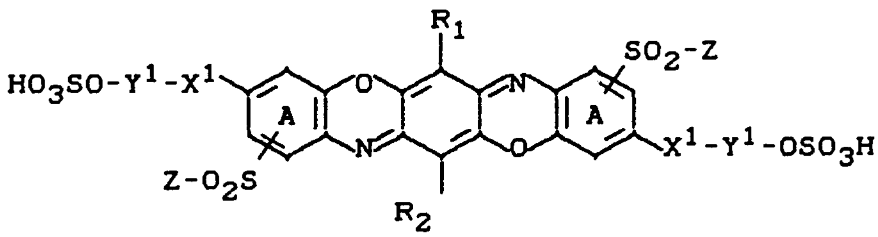

worin die Substituenten die in Anspruch 1 angegebene Bedeutung haben.

3. Reaktivfarbstoffmischung gemäß Anspruch 1, dadurch gekennzeichnet, daß die Verbindung I folgender Formel (Ia) entspricht

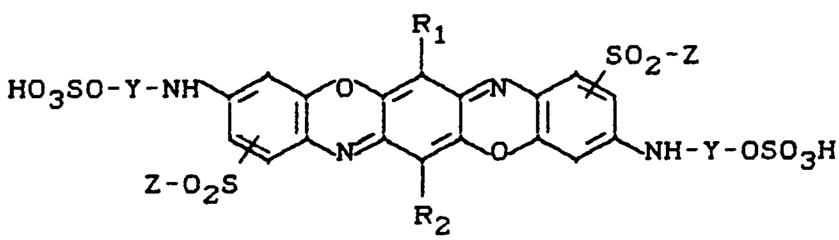

(Ia)

worin

| | |
|---|---|
| $R_1$,$R_2$ und Y | die oben angegebene Bedeutung haben und |
| Z | $-CH_2-CH_2-OSO_3H$ oder $-CH=CH_2$ |

bedeutet.

4. Reaktivfarbstoffmischung gemäß Anspruch 1, dadurch gekennzeichnet, daß der Farbstoff (I) folgender Formel (Ib) entspricht

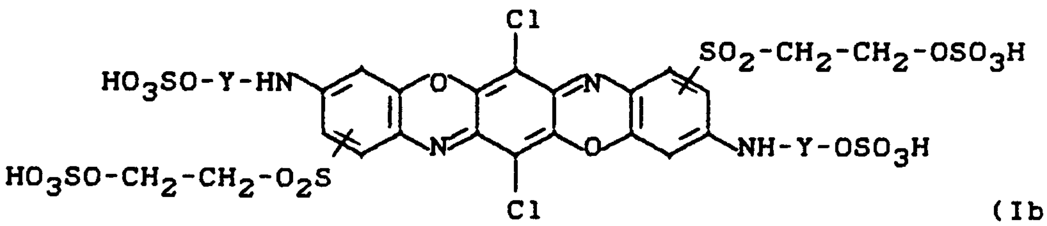

(Ib)

worin
Y = $C_2-C_4$-Alkylen.

5. Reaktivfarbstoffmischung gemäß Anspruch 1, dadurch gekennzeichnet, daß der Farbstoff I folgender Formel (Ic) oder (Ie)

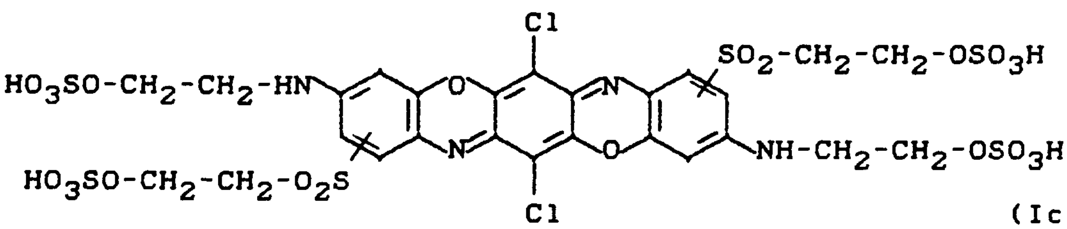

(Ic)

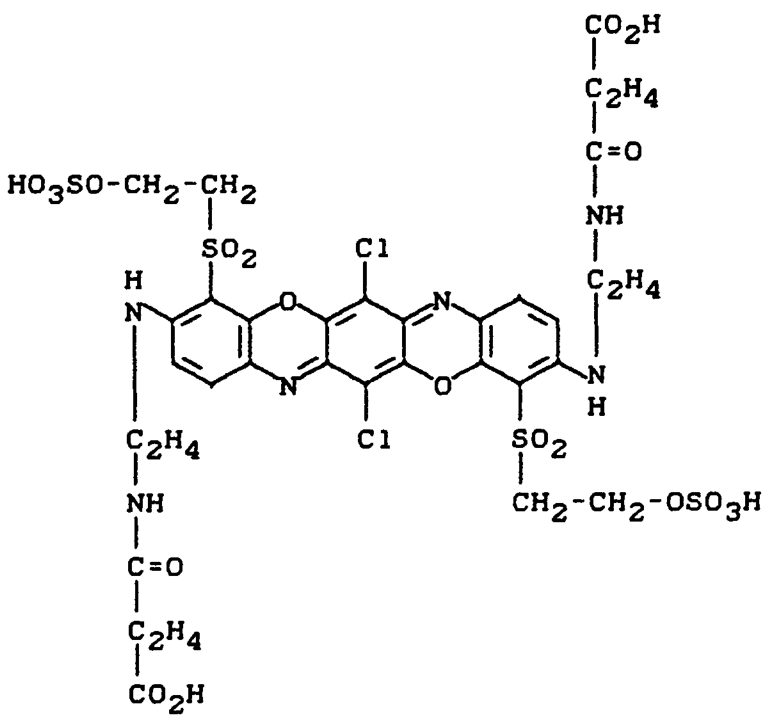

(Ie)

entspricht.

6. Reaktivfarbstoffmischung gemäß wenigstens einem der vorhergehenden Ansprüche, dadurch gekennzeichnet, daß, bezogen auf die Mischung der Farbstoffe I und II 10 bis 90 Gew.-% des Farbstoffes I und 90 bis 10 Gew.-% des Farbstoffes II enthalten sind.

7. Reaktivfarbstoffmischung gemäß wenigstens einem der vorhergehenden Ansprüche, dadurch gekennzeichnet, daß die Farbstoffmischung auf 100 Gew.-Teile Reaktivfarbstoffmischung 1 bis 50 Teile eines anorganischen Salzes, 1 bis 5 Gew.-Teile eines anorganischen Puffers, 0,5 bis 10 Teile eines organischen anionischen Dispergiermittels und 0,5 bis 5 Teile eines Entstaubungsmittels enthält.

8. Reaktivfarbstoffmischung gemäß wenigstens einem der vorhergehenden Ansprüche, dadurch gekennzeichnet, daß sie als Flüssigmarke vorliegt.

9. Verfahren zum Färben von Cellulosefasern und von Cellulosefasern enthaltenden Fasermischungen, dadurch gekennzeichnet, daß man eine Reaktivfarbstoffmischung gemäß wenigstens einem der vorhergehenden Ansprüche verwendet.

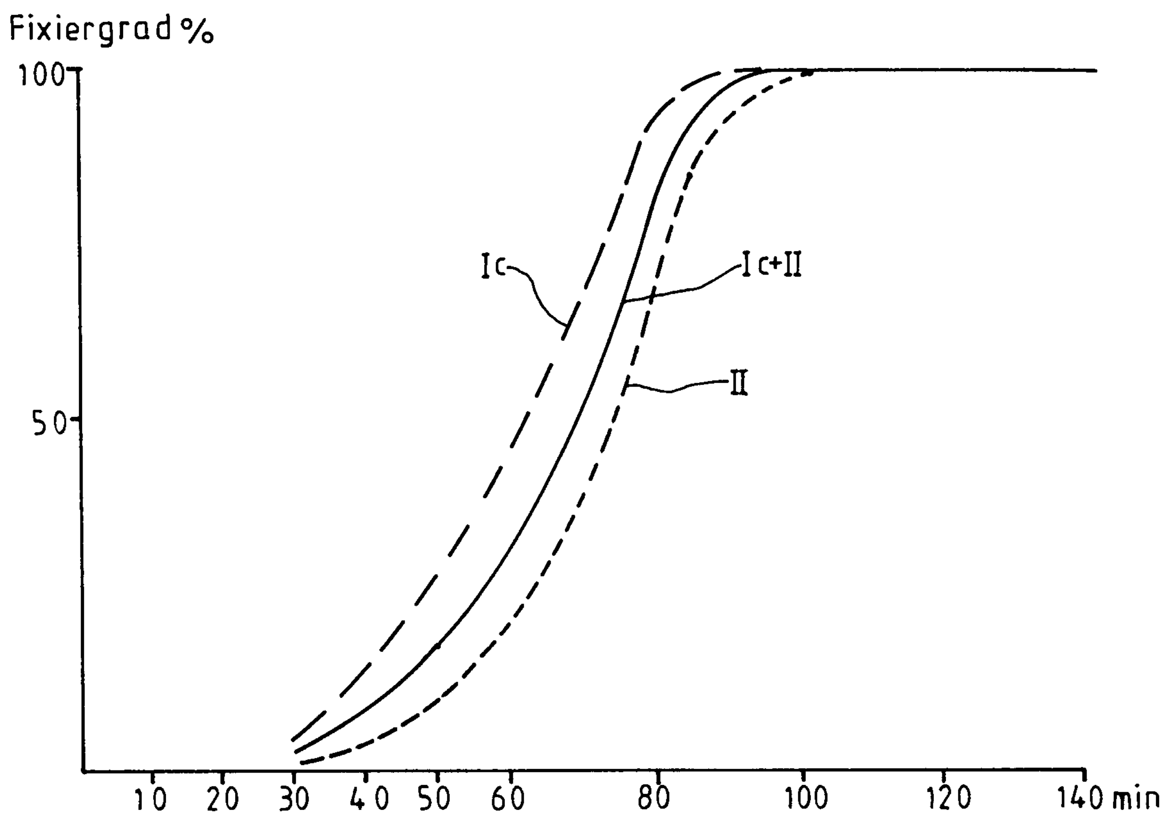


FIG.1